# EUROPÄISCHE PATENTSCHRIFT

(11) **EP 1 566 353 B1**
(45) Veröffentlichungstag und Bekanntmachung des Hinweises auf die Patenterteilung: **18.04.2007**
(21) Anmeldenummer: 05003280.4
(22) Anmeldetag: 16.02.2005
(51) Int. Cl.: B65G 53/28, B65G 53/52, B05B 7/14

(54) **Pulverförderpumpe**
Feed pump for powder
Pompe d'alimentation pour matière poudreuse

(30) Priorität: 20.02.2004 DE 102004008495
(43) Veröffentlichungstag der Anmeldung: 24.08.2005
(73) Patentinhaber: Dürr Systems GmbH, 70435 Stuttgart (DE)
(72) Erfinder: Herre, Frank, 71739 Oberriexingen (DE); Fritz, Hans-Georg, 73760 Ostfildern (DE); Dürr, Thomas, 71732 Tamm (DE)
(74) Vertreter: Beier, Ralph

(56) Entgegenhaltungen:
- EP-A- 0 377 000

## Beschreibung

Die Erfindung betrifft eine Pulverförderpumpe zum Einsatz in einer Pulverbeschichtungsanlage.

In Pulverbeschichtungsanlagen wurde zur Förderung des als Beschichtungsmaterial dienenden Pulvers früher das sogenannte Dünnstromverfahren verwendet, bei dem das Pulver im fluidisierten Zustand in einem Luftstrom durch schlauchförmige Förderleitungen zu dem Applikationsgerät (z.B. Sprühpistole oder Rotationszerstäuber) gefördert wurde. Der Begriff Dünnstromverfahren rührt daher, dass der Pulveranteil in dem geförderten Pulver-Luft-Gemisch relativ gering ist, so dass die schlauchförmigen Förderleitungen einen entsprechend großen Querschnitt aufweisen mussten, um die gewünschte Pulvermenge zu fördern.

Aus diesem Grund wurde bereits die sogenannte Pulverdichtstromförderung (PDF) vorgeschlagen, die einen größeren Pulveranteil in dem geförderten Pulver-Luft-Gemisch aufweist. Die eigentliche Pulverförderung kann hierbei durch eine auch als PDF-Pumpe bezeichnete Pulverförderpumpe erfolgen, die eine Förderkammer mit einem Einlass und einem Auslass aufweist, wobei über den Einlass Pulver in die Förderkammer eingesaugt und anschließend über den Auslass ausgestoßen wird, um zu einem Applikationsgerät (z.B. Sprühpistole oder Rotationszerstäuber) zu gelangen. Zur Befüllung der Förderkammer wird zunächst der Auslass der Förderkammer geschlossen, während der Einlass der Förderkammer geöffnet wird, um Pulver aus einem Pulverbehälter ansaugen zu können. Anschließend wird dann in der Förderkammer ein Unterdruck erzeugt, indem Luft über die Förderkammerwandung abgesaugt wird, wobei die Förderkammerwandung luftdurchlässig, aber pulverundurchlässig ist, so dass das in der Förderkammer befindliche Pulver nicht abgesaugt wird. Nach einer ausreichenden Befüllung der Förderkammer wird dann die Absaugung beendet und das Einlassventil geschlossen. Zum Ausstoßen des in der Förderkammer befindlichen Pulvers wird dann der Auslass geöffnet und über die luftdurchlässige Förderkammerwandung Druckluft in die Förderkammer eingeblasen, wodurch das Pulver aus der Förderkammer ausgestoßen wird. Durch einen zyklischen Betrieb der vorstehend beschriebenen Einsaug- und Ausstoßphasen wird Pulver von dem Pulverbehälter zu dem Applikationsgerät gefördert. Die Förderkammer kann hierbei aus einem Schlauch- oder Rohrabschnitt bestehen, dessen hohlzylindrische Wandung gasdurchlässig, aber pulverundurchlässig ist und damit ein Filterelement bildet, wobei der Einlass zu der Förderkammer durch ein Einlassventil verschließbar ist, während der Auslass aus der Förderkammer durch ein Auslassventil verschlossen werden kann.

Nachteilig an der vorstehend beschriebenen bekannten PDF-Pumpe ist die Tatsache, dass die Förderkammerwandung aus einem porösen Material besteht, das sich im Betrieb allmählich mit dem Pulver zusetzen kann, wodurch die Luftdurchlässigkeit der Förderkammerwandung und damit auch die Fördermenge nachlässt.

Weiterhin ist aus WO 98/11431 A1 bzw. EP 0 377 000 B1 eine Pulverförderpumpe bekannt, bei der der Unterdruck in der Förderkammer durch eine Absaugung in einem gasdurchlässigen Abschnitt der Förderkammer Wandung erzeugt wird. Die Förderkammerwandung ist hierbei jedoch nur in einem kleinen Abschnitt gasdurchlässig, in dem die Absaugung erfolgt, wohingegen die Förderkammerwandung ansonsten gasdicht ist.

Auch bei dieser bekannten Pulverförderpumpe kann die Förderkammerwandung im Bereich der Absaugung mit Pulver zusetzen, wodurch die Luftdurchlässigeit und damit die Förderleistung beeinträchtigt wird.

Der Erfindung liegt deshalb die Aufgabe zugrunde, bei der vorstehend beschriebenen bekannten PDF-Pumpe ein Zusetzen der luftdurchlässigen Förderkammerwandung zu verhindern.

Diese Aufgabe wird, ausgehend von der vorstehend beschriebenen bekannten PDF-Pumpe gemäß dem Oberbegriff des Anspruchs 1, durch die kennzeichnenden Merkmale des Anspruchs 1 gelöst.

Die Erfindung umfasst die allgemeine technische Lehre, die Förderkammerwandung in Abkehr von dem Konstruktionsprinzip der eingangs beschriebenen bekannten PDF-Pumpe im Wesentlichen gas- bzw. luftdicht auszuführen und die Absaugung aus der Förderkammer zur Unterdruckerzeugung stattdessen in anderer Weise durchzuführen. Auf diese Weise wird verhindert, dass sich das Pulver in der Förderkammerwandung festsetzen kann. Dies ist besonders vorteilhaft, weil das Pulver innerhalb der Förderkammer überwiegend entlang der Förderkammerwandung strömt und sich deshalb dort besonders leicht festsetzen kann.

Erfindungsgemäß erfolgt die Unterdruckerzeugung in der Förderkammer bei der erfindungsgemäßen Pulverförderpumpe dadurch, dass der Unterdruckanschluss im Inneren der Förderkammer zu der Förderkammerwandung beabstandet ausmündet. Dies ist vorteilhaft, da die Pulverdichte wandungsnah besonders groß ist, während die Pulverdichte in der Mitte der Förderkammer wesentlich geringer ist, so dass die Gefahr eines Zusetzens mit dem Pulver wesentlich geringer ist, wenn zu der Förderkammerwandung beabstandet abgesaugt wird.

In einem bevorzugten Ausführungsbeispiel ist in der Förderkammer ein Membrankörper angeordnet, der mindestens teilweise gasdurchlässig, aber pulverundurchlässig ist, wobei der Unterdruckanschluss zur Absaugung aus der Förderkammer in dem Membrankörper ausmündet. Die Absaugung aus der Förderkammer erfolgt hierbei also nicht direkt aus der Förderkammer, sondern über den Membrankörper, der entsprechend der porösen Wandung bei der eingangs beschriebenen bekannten PDF-Pumpe ein Filterelement bildet.

Der Membrankörper ist vorzugsweise zu der Förderkammerwandung beabstandet angeordnet und kann sich beispielsweise innerhalb der Förderkammer mittig befinden. Dies ist sinnvoll, da die Pulverdichte innerhalb der Förderkammer in der Mitte wesentlich geringer als im Bereich der Förderkammerwandung ist, so dass die Gefahr eines Zusetzens des Membrankörpers mit dem Pulver entsprechend geringer ist.

Darüber hinaus ist der Membrankörper vorzugsweise stromlinienförmig und zwischen dem Einlass und dem Auslass der Förderkammer in Strömungsrichtung ausgerichtet, wobei der Einlass und der Auslass der Förderkammer einander vorzugsweise gegenüberliegen.

In einer Variante der Erfindung ist der Membrankörper zumindest auf einem Großteil seiner Oberfläche gasdurchlässig, aber pulverundurchlässig, wodurch sich ein geringer Stömungswiderstand des Membrankörpers beim Absaugen erreichen lässt.

In einer anderen Variante der Erfindung ist der Membrankörper dagegen auf der dem Einlass zugewandten Seite im Wesentlichen gasundurchlässig und pulverundurchlässig und auf der dem Auslass der Förderkammer zugewandten Seite gasdurchlässig, aber pulverundurchlässig. Die Gas- und Pulverundurchlässigkeit des Membrankörpers auf der dem Einlass zugewandten Seite erschwert vorteilhaft das Festsetzen des Pulvers in dem Menbrankörper. Auf der dem Auslass zugewandten Seite des Membrankörpers ist die Gefahr des Festsetzens von Pulver dagegen strömungsbedingt wesentlich geringer, so dass der Membrankörper auf dieser Seite gasdurchlässig ausgeführt sein kann, um Luft aus der Förderkammer abzusaugen.

Die Entleerung der Förderkammer nach einer vorangegangenen Befüllung erfolgt wie bei der eingangs beschriebenen bekannten PDF-Pumpe, indem das in der Förderkammer befindliche Pulver durch Druckluft ausgestoßen wird. Hierzu weist die erfindungsgemäße Pulverförderpumpe vorzugsweise einen Überdruckanschluss auf, der innerhalb der Förderkammer in dem Membrankörper ausmündet. Die Zuführung der Druckluft zum Ausstoßen des Pulvers aus der Förderkammer erfolgt hierbei also indirekt über den Membrankörper, der als Filterelement wirkt.

Hierbei ist es möglich, dass der Unterdruckanschluss zum Absaugen aus der Förderkammer und der Überdruckanschluss zum Ausstoßen des Pulvers aus der Förderkammer über eine gemeinsame Leitung in den Membrankörper münden. Dies ist vorteilhaft, da so auf eine separate Leitung für den Unterdruckanschluss bzw. den Überdruckanschluss verzichtet werden kann.

Es ist jedoch alternativ auch möglich, dass der Überdruckanschluss zum Ausstoßen des Pulvers aus der Förderkammer direkt, d. h. außerhalb des Membrankörpers, in die Förderkammer mündet. Dies ist vorteilhaft, weil der Druckaufbau in der Förderkammer beim Ausstoßen des Pulvers aus der Förderkammer so nicht durch den Strömungswiderstand des Membrankörpers behindert wird, was eine schnellere Entleerung der Förderkammer ermöglicht.

Weiterhin umfasst die Erfindung die allgemeine technische Lehre, den Unterdruck in der Förderkammer zumindest teilweise aufzubauen, bevor der Einlass der Förderkammer geöffnet wird. Der Einlass in die Förderkammer wird also erst geöffnet, wenn sich in der Förderkammer bereits ein Unterdruck aufgebaut hat. Dies bietet den Vorteil, dass Schwankungen des Unterdruckaufbaus in der Förderkammer einen geringeren Einfluss auf die Dosiergenauigkeit haben. Die erfindungsgemäße Pulverförderpumpe weist deshalb ein Einlassventil und ein Absaugventil auf, die unabhängig voneinander steuerbar sind, um vor dem Öffnen des Einlassventils zunächst das Absaugventil öffnen zu können, damit ein Unterdruck in der Förderkammer aufgebaut wird.

Vorzugsweise wird die Erzeugung des Unterdrucks in der Förderkammer sogar beendet, bevor der Einlass der Förderkammer geöffnet wird. Die Phase der Unterdruckerzeugung und die Einsaugphase weisen also vorzugsweise keine zeitliche Überlappung auf. Dies bietet den Vorteil, dass beim Absaugen von Luft aus der Förderkammer aufgrund des dann geschlossenen Einlasses kein Pulver abgesaugt werden kann, was unerwünscht wäre. Aus diesem Grund kann sogar auf ein Filterelement zur Luftabsaugung aus der Förderkammer verzichtet werden, wodurch sich mit einem gegebenen Apparateaufwand ein höherer Unterdruck in der Förderkammer erzeugen lässt. Vorzugsweise erfolgt jedoch auch im Rahmen der Erfindung die Absaugung aus der Förderkammer durch ein Filterelement, um die Absaugung von Restpulver zu verhindern, das sich möglicherweise noch in der Förderkammer befindet.

Der Einlass der Förderkammer wird vorzugsweise erst dann geöffnet, wenn sich in der Förderkammer ein vorgegebener Unterdruck aufgebaut hat. Dies bietet den Vorteil, dass zu Beginn der Einsaugphase definierte Druckverhältnisse herrschen, so dass sich die eingesaugte Pulvermenge leicht berechnen und steuern bzw. regeln lässt.

Hierzu kann der Unterdruck in der Förderkammer durch einen Drucksensor gemessen werden, wobei eine Steuereinheit das Absaugventil schließt und gleichzeitig oder mit einer Verzögerungszeit das Einlassventil öffnet, wenn der gemessene Unterdruck in der Förderkammer einen vorgegebenen Grenzwert erreicht hat.

Es ist jedoch alternativ auch möglich, dass in der Förderkammer vor dem Öffnen des Einlassventils ein vorgegebener Unterdruck aufgebaut wird, indem das Absaugventil entsprechend dem gewünschten Unterdruck für eine vorgegebene Zeitspanne geöffnet wird, wobei sich der funktionale Zusammenhang zwischen der Öffnungsdauer des Absaugventils und dem resultierenden Unterdruck durch Versuche ermitteln lässt.

Die Abgabe des in der Förderkammer befindlichen Pulvers durch den Auslass erfolgt vorzugsweise, indem das Pulver aus der Förderkammer ausgestoßen wird. Hierzu mündet vorzugsweise ein Überdruckanschluss in die Förderkammer, über den ein Fluid zum Ausstoßen des Pulvers in die Förderkammer eingeleitet werden kann, wobei der Überdruckanschluss durch ein Ausstoßventil verschließbar ist. Vorzugsweise ist das Ausstoßventil unabhängig von dem Einlassventil, dem Auslassventil und/oder dem Absaugventil steuerbar. Dies bietet den Vorteil, dass die Unterdruckerzeugungsphase, die Einsaugphase, die Auslassphase und die Ausstoßphase unabhängig voneinander steuerbar sind, um ein optimales Förderungsverhalten zu erreichen.

Darüber hinaus kann im Rahmen der Erfindung eine Reinigung der Förderkammer erfolgen, indem ein Reinigungsfluid (z.B. Druckluft) in die Förderkammer eingeleitet wird. Im Gegensatz zu der eingangs beschriebenen bekannten PDF-Pumpe wird das Reinigungsfluid hierbei vorzugsweise über den Membrankörper und nicht direkt in die Förderkammer eingeleitet. Dies bietet den Vorteil eines langsameren Druckaufbaus in der Förderkammer während des Reinigungsbetriebs, wodurch die Gefahr eines Platzens des Förderschlauchs verringert wird. Es besteht jedoch im Rahmen der Erfindung alternativ auch die Möglichkeit, dass das Reinigungsfluid direkt unter Umgehung des Membrankörpers in die Förderkammer eingeleitet wird.

Vorzugsweise liegt die Dauer eines vollständigen Arbeitstaktes einschließlich Unterdruckerzeugungsphase, Einsaugphase und Ausstoßphase im Bereich von 200 ms bis 1 s, wobei beliebige Zwischenwerte möglich sind und ein Wert der Taktdauer von 500 ms besonders vorteilhaft ist.

Die Unterdruckerzeugungsphase, die Einsaugphase und die Ausstoßphase können unterschiedliche Längen aufweisen oder auch gleich lang sein, wobei Werte zwischen 50 ms und 200 ms oder beliebige Zwischenwerte innerhalb dieses Intervalls möglich sind. Hierbei hat sich eine Zeitdauer von 150 ms für die Unterdruckerzeugungsphase, die Einsaugphase und/oder die Ausstoßphase als vorteilhaft erwiesen. Die Erfindung ist jedoch nicht auf die vorstehend erwähnten Werte für die Dauer der Unterdruckerzeugungsphase, der Einsaugphase und der Ausstoßphase beschränkt, sondern grundsätzlich auch mit anderen Werten realisierbar.

Weiterhin ist zu erwähnen, dass zwischen der Unterdruckerzeugungsphase, der Einsaugphase und/oder der Ausstoßphase vorzugsweise Verzögerungszeiten liegen, die beispielsweise im Bereich von 20 ms bis 200 ms liegen können. Diese Verzögerungszeiten sollen sicherstellen, dass die jeweiligen Ventile nach einer entsprechenden Ansteuerung die gewünschte Ventilstellung erreicht haben. Die Erfindung ist jedoch hinsichtlich der Dauer der Verzögerungszeiten nicht auf die vorstehend beschriebenen Werte beschränkt, sondern grundsätzlich auch mit anderen Werten für die Verzögerungszeit realisierbar.

Schließlich ist zu erwähnen, dass die Erfindung nicht auf eine Pulverförderpumpe als Einzelteil beschränkt ist, sondern vielmehr auch eine Pulverbeschichtungsanlage mit einer derartigen Pulverförderpumpe umfasst.

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figuren näher erläutert. Es zeigen:
- Figur 1: ein Fluidikdiagramm eines bevorzugten Ausführungsbeispiels einer Pulverbeschichtungsanlage mit einer erfindungsgemäßen Pulverförderpumpe,
- Figur 2: mehrere Zeitdiagramme zur Verdeutlichung des Öffnungs- und Schließverhaltens der einzelnen Ventile der erfindungsgemäßen Pulverförderpumpe aus Figur 1 sowie
- Figuren 3-6: verschiedene Ausführungsbeispiele der Förderkammern der Pulverförderpumpe aus Figur 1.

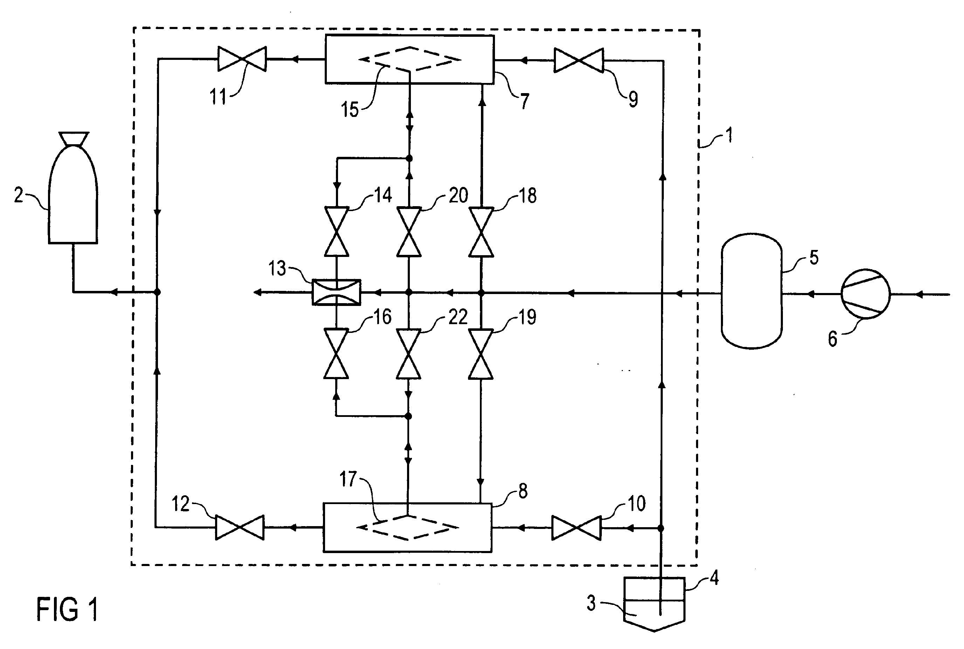

Das Fluidikdiagramm in Figur 1 zeigt eine Pulverbeschichtungsanlage mit einer erfindungsgemäßen Pulverförderpumpe 1 zur Pulverversorgung eines Rotationszerstäubers 2, wobei der Rotationszerstäuber 2 herkömmlich aufgebaut sein kann und deshalb im Folgenden nicht weiter beschrieben wird. Anstelle des Rotationszerstäubers 2 kann jedoch auch ein anderes Pulverapplikationsgerät eingesetzt werden, wie beispielsweise eine Sprühpistole.

Zur Aufnahme eines als Beschichtungsmittel dienenden Pulvers 3 ist die Pulverförderpumpe 1 eingangsseitig mit einem Pulverbehälter 4 verbunden, wobei der Pulverbehälter 4 ebenfalls herkömmlich aufgebaut sein kann und deshalb im Folgenden nicht näher beschrieben wird.

Darüber hinaus ist die Pulverförderpumpe 1 eingangsseitig mit einem Druckluftbehälter 5 verbunden, der von einer Druckluftpumpe 6 gespeist wird.

Zur Pulverförderung weist die Pulverförderpumpe 1 zwei parallel geschaltete Förderzweige mit jeweils einer Förderkammer 7, 8 auf.

Die beiden Förderkammern 7, 8 weisen jeweils einen Einlass auf, wobei die beiden Einlässe der Förderkammern 7, 8 über jeweils ein Einlassventil 9, 10 mit dem Pulverbehälter 4 verbunden sind. Bei geöffnetem Einlassventil 9, 10 kann also das Pulver 3 aus dem Pulverbehälter 4 in die Förderkammern 7, 8 eingesaugt werden, wie noch detailliert beschrieben wird.

Weiterhin weisen die Förderkammern 7, 8 jeweils einen Auslass auf, wobei die beiden Auslässe der Förderkammern 7, 8 über jeweils ein Auslassventil 11, 12 mit dem Rotationszerstäuber 2 verbunden sind. Bei geöffnetem Auslassventil 11, 12 kann also das in den Förderkammern 7, 8 befindliche Pulver 3 aus den Förderkammern 7, 8 ausgestoßen werden, wie ebenfalls noch detailliert beschrieben wird.

Die Einlassventile 9, 10 und die Auslassventile 11, 12 können hierbei als Quetschventile ausgebildet sein, die pneumatisch, hydraulisch oder elektrisch angetrieben werden können.

Zum Einsaugen des Pulvers 3 über die Einlassventile 9, 10 in die Förderkammern 7, 8 weist die Pulverförderpumpe 1 einen Unterdruckerzeuger 13 auf, der an sich herkömmlich aufgebaut ist. Der Unterdruckerzeuger 13 weist eine Injektordüse auf, die von dem Druckluftbehälter 5 mit Druckluft gespeist wird und nach dem Venturi-Prinzip einen Unterdruck an einem Unterdruckanschluss erzeugt.

Der Unterdruckanschluss des Unterdruckerzeugers 13 ist über ein Absaugventil 14 mit einem innerhalb der Förderkammer 7 angeordneten Membrankörper 15 verbunden und über ein Absaugventil 16 an einen innerhalb der Förderkammer 8 befindlichen Membrankörper 17 angeschlossen. Die Membrankörper 15, 17 sind jeweils gasdurchlässig, aber pulverundurchlässig, so dass über die Membrankörper 15, 17 Luft aus den Förderkammern 7, 8 abgesaugt werden kann, wohingegen das Pulver 3 in den Förderkammern 7, 8 verbleibt. Wenn das Absaugventil 14 geöffnet wird, saugt der Unterdruckerzeuger 13 über den Membrankörper 15 Luft aus der Förderkammer 7 ab und erzeugt dort einen Unterdruck zum Einsaugen des Pulvers 3 aus dem Pulverbehälter 4. Entsprechend erzeugt der Unterdruckerzeuger 13 einen Unterdruck in der Förderkammer 8, wenn das Absaugventil 16 geöffnet ist.

Der Druckluftbehälter 5 ist jedoch nicht nur mit dem Unterdruckerzeuger 13 verbunden, um einen Unterdruck in den Förderkammern 7, 8 zu erzeugen, sondern dient auch zum Ausstoßen des Pulvers 3 aus den Förderkammern 7, 8. Hierzu ist der Druckluftbehälter 5 über ein Ausstoßventil 18 mit der Förderkammer 7 und über ein weiteres Ausstoßventil 19 mit der Förderkammer 8 verbunden. Im geöffneten Zustand der Ausstoßventile 18, 19 wird also Druckluft aus dem Druckluftbehälter 5 in die Förderkammern 7, 8 eingeblasen, wodurch das in den Förderkammern 7, 8 befindliche Pulver 3 aus den Förderkammern 7, 8 ausgestoßen wird, sofern die Auslassventile 11, 12 geöffnet sind. Von Bedeutung ist hierbei, dass die Ausstoßventile 18, 19 unter Umgehung der Membrankörper 15, 17 direkt in die Förderkammern 7, 8 münden. Dies bietet den Vorteil, dass der Druckaufbau in den Förderkammern 7, 8 beim Ausstoßen des Pulvers 3 aus den Förderkammern 7, 8 nicht durch den Strömungswiderstand der Membrankörper 15, 17 verlangsamt wird.

Die direkte Zuführung der Druckluft in die Förderkammern 7, 8 ermöglicht also vorteilhaft einen schnelleren Druckaufbau und dadurch eine rasche Entleerung der Förderkammern 7, 8.

Die in dem Druckluftbehälter 5 gespeicherte Druckluft dient jedoch nicht nur zum Ausstoßen des in den Förderkammern 7, 8 befindlichen Pulvers 3, sondern auch zur Reinigung der Förderkammern 7, 8. Hierzu ist der Druckluftbehälter 5 über ein Reinigungsventil 20 mit der Förderkammer 7 und in entsprechender Weise über ein Reinigungsventil 22 mit der Förderkammer 8 verbunden. Der Druckluftbehälter 5 bläst also Druckluft zu Reinigungszwecken in die Förderkammer 7 ein, wenn das Reinigungsventil 20 geöffnet wird. Entsprechend wird Druckluft zu Reinigungszwecken in die Förderkammer 8 eingeblasen, wenn das Reinigungsventil 22 geöffnet ist.

Die Zuführung der Reinigungsluft über die Membrankörper 15, 17 bietet den Vorteil, dass der Druckaufbau im Reinigungsbetrieb langsamer erfolgt, wodurch die Gefahr eines Platzens eines Förderschlauchs im Reinigungsbetrieb verringert wird.

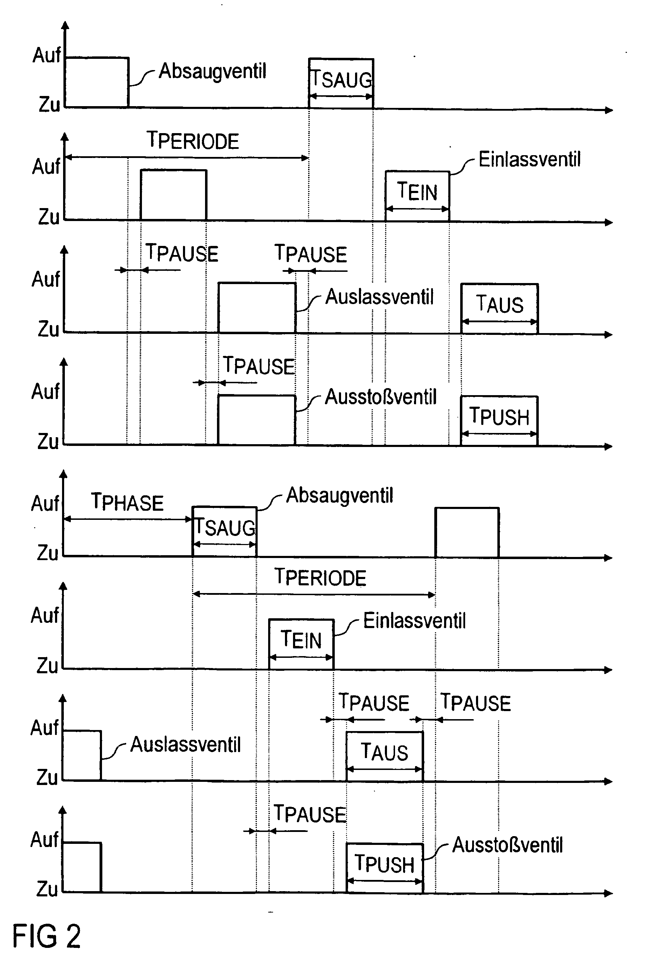

Im Folgenden wird nun anhand von Figur 2 das erfindungsgemäße Betriebsverfahren der Pulverförderpumpe 1 beschrieben. Die vier oberen Zeitdiagramme in Figur 2 zeigen hierbei von oben nach unten das zeitliche Öffnungsverhalten des Absaugventils 14, des Einlassventils 9, des Auslassventils 11 und des Ausstoßventils 18. Die unteren vier Zeitdiagramme in Figur 2 zeigen dagegen von oben nach unten das zeitliche Öffnungsverhalten des Absaugventils 17, des Einlassventils 10, des Auslassventils 12 und des Ausstoßventils 19.

Zu Beginn eines Arbeitstaktes wird zunächst das Absaugventil 14 geöffnet, während das Einlassventil 9, das Auslassventil 11 und das Ausstoßventil 18 geschlossen sind. Die Öffnung des Absaugventils 14 erfolgt hierbei für eine Dauer T_{SAUG}, die im Bereich von 50 ms und 200 ms liegen kann. Während dieser Unterdruckerzeugungsphase wird in der Förderkammer 7 ein definierter Unterdruck erzeugt, der später zum Einsaugen des Pulvers 3 in die Förderkammer 7 ausgenutzt wird, wie noch detailliert beschrieben wird.

Nach Ablauf der Unterdruckerzeugungsphase wird das Absaugventil 14 geschlossen, wobei das Einlassventil 9, das Auslassventil 11 und das Ausstoßventil 18 während einer vorgegebenen Verzögerungszeit T_{PAUSE} weiterhin geschlossen bleiben. Die Verzögerungszeit T_{PAUSE} liegt hierbei im Bereich von 10 ms bis 200 ms und stellt sicher, dass keine zeitlichen Überlappungen der einzelnen Phasen eines Arbeitstaktes auftreten.

Nach Ablauf der Verzögerungszeit T_{PAUSE} wird dann das Einlassventil 9 geöffnet, so dass der in der Förderkammer 7 zuvor aufgebaute Unterdruck das Pulver 3 aus dem Pulverbehälter 4 ansaugt, wodurch die Förderkammer 7 mit Pulver gefüllt wird. Das Einlassventil 9 wird hierbei für eine Dauer T_{EIN} geöffnet, die im Bereich zwischen 50 ms und 200 ms liegen kann. Nach Ablauf dieser Einlassphase wird das Einlassventil 9 geschlossen, wobei das Auslassventil 11, das Ausstoßventil 18 und das Absaugventil 14 während einer weiteren Verzögerungszeit zunächst ebenfalls geschlossen bleiben.

Nach Ablauf dieser Verzögerungszeit werden dann gleichzeitig das Auslassventil 11 und das Ausstoßventil 18 geöffnet, so dass Druckluft aus dem Druckluftbehälter 5 in die Förderkammer 7 eingeblasen wird, wodurch das in der Förderkammer 7 befindliche Pulver 3 über das Auslassventil 11 ausgestoßen wird. Die Öffnungsphase des Auslassventils 11 kann hierbei eine Dauer T_{AUS} haben, die im Bereich von 50 ms bis 200 ms liegt. Auch die Öffnungsphase des Ausstoßventils 18 kann eine Dauer T_{PUSH} haben, die im Bereich von 50 ms bis 200 ms liegt.

Nach dem Ablauf der Auslass- und Ausstoßphase werden dann das Auslassventil 11 und das Ausstoßventil 18 geschlossen, wobei das Einlassventil 9 und das Absaugventil 14 für eine Verzögerungszeit ebenfalls geschlossen bleiben. Nach Ablauf dieser Verzögerungszeit wird der vorstehend beschriebene Arbeitstakt zyklisch wiederholt, wobei ein Takt eine Periodendauer T_{PERIODE} aufweist, die beispielsweise 500 ms beträgt.

Das Einlassventil 10, das Auslassventil 12, das Ausstoßventil 19 und das Absaugventil 16 werden in gleicher Weise angesteuert, wobei jedoch eine Phasenverschiebung T_{PHASE} vorgesehen ist, die im Bereich von 250 ms liegen kann.

Vorteilhaft an der fehlenden Zeitlichen Überlappung der Unterdruckerzeugungsphase und der Einsaugphase ist die Tatsache, dass zu Beginn der Einsaugphase bereits ein definierter Unterdruck in der Förderkammer 7 bzw. 8 hergestellt wurde, so dass die Fördermenge genau vorbestimmt werden kann.

Die direkte Verbindung der Ausstoßventile 18, 19 mit den Förderkammern 7, 8 unter Umgehung der Membrankörper 15, 17 bietet den Vorteil, dass der Druckaufbau durch die Membrankörper 15, 17 nicht behindert wird, was eine schnellere Entleerung der Förderkammern 7, 8 ermöglicht.

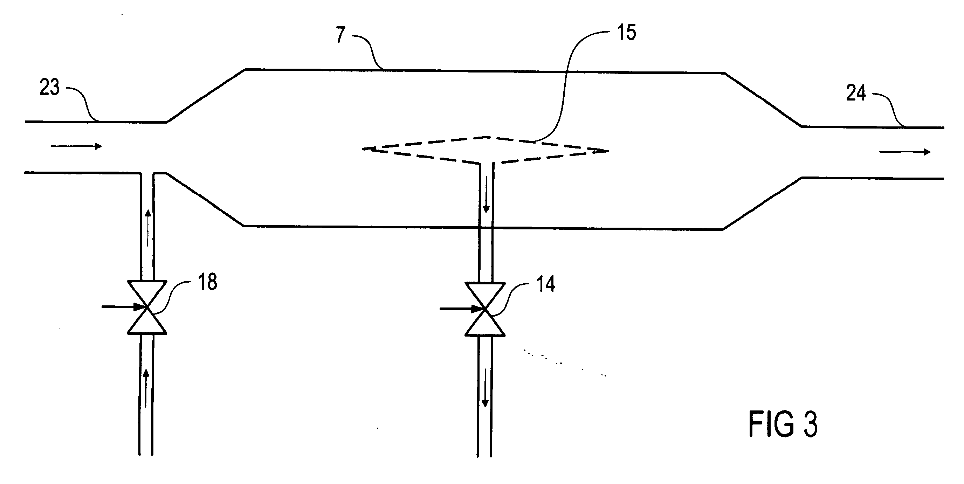

Die Detailansicht in Figur 3 zeigt die Förderkammer 7, wobei die andere Förderkammer 8 analog aufgebaut ist und deshalb nicht weiter beschrieben wird.

Zur Zuführung des Pulvers 3 weist die Förderkammer 7 einen Einlass 23 auf, wobei der Einlass 23 mit dem in Figur 1 dargestellten Einlassventil 9 verbunden ist.

Weiterhin weist die Förderkammer 7 einen Auslass 24 auf, der mit dem in Figur 1 dargestellten Auslassventil 11 verbunden ist.

Der Membrankörper 15 ist hierbei stromlinienförmig und innerhalb der Förderkammer 7 mittig angeordnet. Dies ist vorteilhaft, weil die Pulverdichte im Betrieb innerhalb der Förderkammer 7 wandungsnah wesentlich größer ist als in der Mitte, so dass die Gefahr eines Zusetzens des Membrankörpers 15 durch das Pulver 3 in der Mitte der Förderkammer 7 am geringsten ist.

Darüber hinaus ist der Membrankörper 15 in der Förderkammer 7 parallel zur Strömungsrichtung zwischen dem Einlass 23 und dem Auslass 24 ausgerichtet, so dass der Membrankörper 15 die Strömung innerhalb der Förderkammer 7 nur minimal behindert.

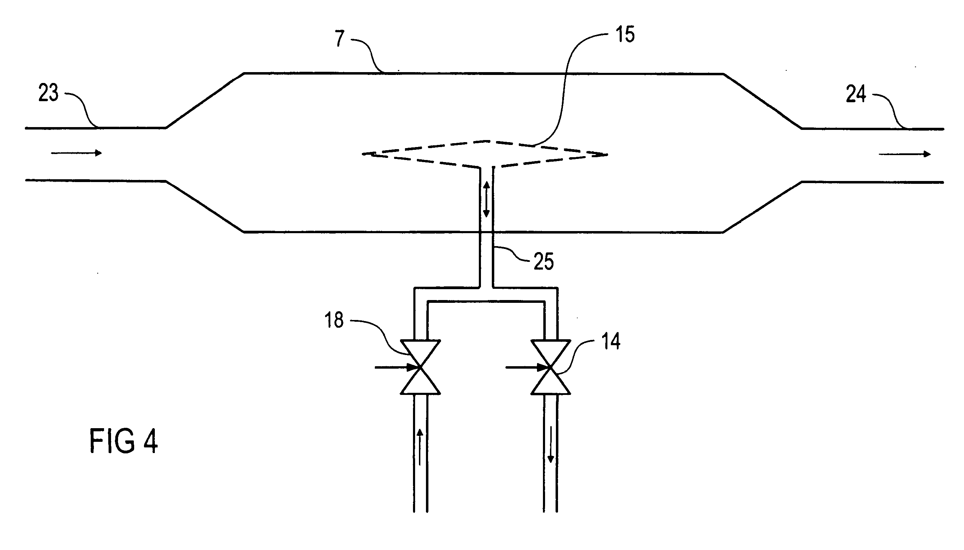

Figur 4 zeigt ein alternatives Ausführungsbeispiel der Förderkammer 7, das weitgehend mit dem vorstehend beschriebenen und in Figur 3 dargestellten Ausführungsbeispiel übereinstimmt, so dass zur Vermeidung von Wiederholungen weitgehend auf die vorstehende Beschreibung verwiesen wird und für entsprechende Bauteile dieselben Bezugszeichen wie in Figur 3 verwendet werden.

Eine Besonderheit dieses Ausführungsbeispiels besteht darin, dass sowohl die Druckluftzufuhr zum Ausstoßen des Pulvers 3 aus der Förderkammer 7 als auch die Absaugung aus der Förderkammer 7 zur Unterdruckerzeugung über den Membrankörper 15 erfolgen. Das Ausstoßventil 18 und das Absaugventil 14 sind hierbei über eine gemeinsame Leitung 25 mit dem Membrankörper 15 verbunden. Dies bietet den Vorteil, dass innerhalb der Förderkammer 7 auf eine zusätzliche Leitung verzichtet werden kann.

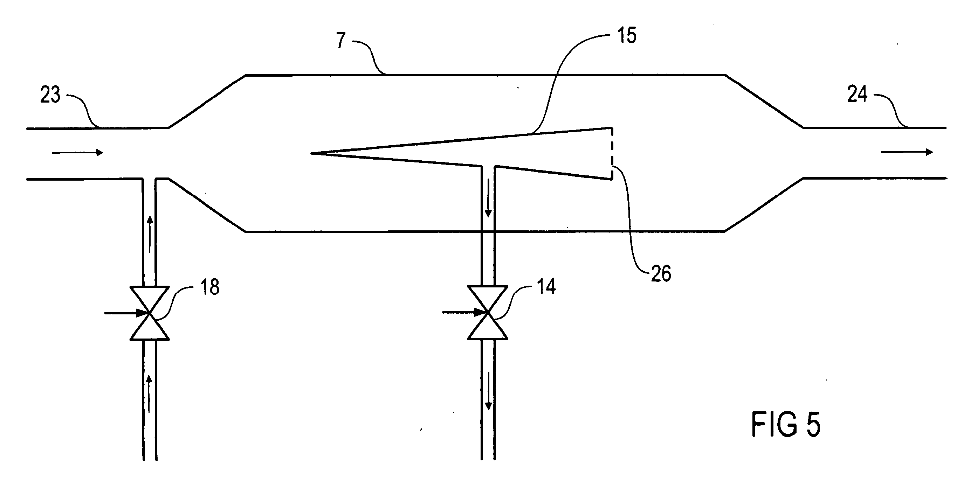

Das in Figur 5 dargestellte Ausführungsbeispiel der Förderkammer 7 stimmt ebenfalls weitgehend mit dem vorstehend beschriebenen und in Figur 3 dargestellten Ausführungsbeispiel überein, so dass zur Vermeidung von Wiederholungen weitgehend auf die vorstehende Beschreibung zu Figur 3 verwiesen wird und im Folgenden für entsprechende Bauteile dieselben Bezugszeichen wie in Figur 3 verwendet werden.

Eine Besonderheit dieses Ausführungsbeispiels besteht darin, dass der Membrankörper 15 auf der dem Einlass 23 zugewandten Seite sowohl gasundurchlässig als auch pulverundurchlässig ist. Auf diese Weise wird verhindert, dass sich das Pulver 3 durch die Strömung innerhalb der Förderkammer 7 in dem Membrankörper 15 festsetzen kann.

Auf der dem Auslass 24 zugewandten Seite weist der Membrankörper 15 dagegen eine gasdurchlässige, aber pulverundurchlässige poröse Wandung 26 auf, über die während der Unterdruckerzeugungsphase Luft aus der Förderkammer 7 abgesaugt wird. Ein Zusetzen der Wandung 26 durch das Pulver 3 ist hierbei jedoch strömungsbedingt weitgehend ausgeschlossen.

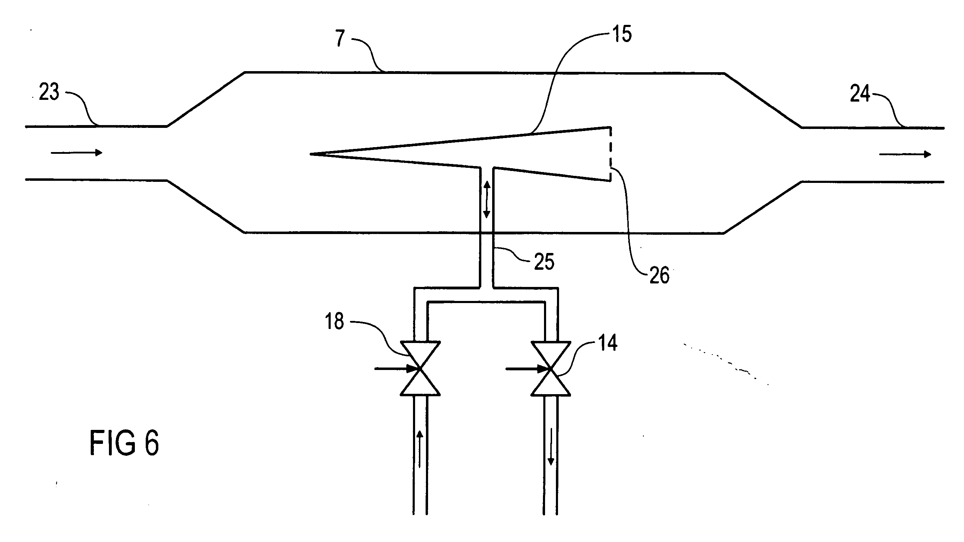

Schließlich kombiniert das Ausführungsbeispiel gemäß Figur 6 die Formgebung des Membrankörpers 15 gemäß Figur 5 mit der gemeinsamen Leitung 25 gemäß Figur 4.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Dessen Grenze wird durch Anspruch 1 vorgegeben.

## Patentansprüche

1. Pulverförderpumpe zur Förderung eines Pulvers (3), insbesondere in einer Pulverbeschichtungsanlage, mit
- einer Förderkammer (7, 8) mit einer Förderkammerwandung, wobei die Förderkammerwandung im Wesentlichen gasdicht ist,
- einem in die Förderkammer (7, 8) mündenden Einlass (23) zur Zuführung des Pulvers (3) in die Förderkammer (7, 8),
- einem aus der Förderkammer (7, 8) ausmündenden Auslass (24) zur Abgabe des Pulvers (3) aus der Förderkammer (7, 8),
- einem in die Förderkammer (7, 8) mündenden Unterdruckanschluss zur Erzeugung eines Unterdrucks in der Förderkammer (7, 8) zum Einsaugen des Pulvers (3) in die Förderkammer (7, 8),
- einem in die Förderkammer (7, 8) mündenden Überdruckanschluss zum Ausblasen des in der Förderkammer (7, 8) befindlichen Pulvers (3) durch den Auslass (24),
**dadurch gekennzeichnet, dass**
der Unterdruckanschluss im Inneren der Förderkammer (7, 8) zu der Förderkammerwandung beabstandet ausmündet.

2. Pulverförderpumpe nach Anspruch 1, **dadurch gekennzeichnet, dass** in der Förderkammer (7, 8) ein Membrankörper (15, 17) angeordnet ist, der mindestens teilweise gasdurchlässig, aber pulverundurchlässig ist, wobei der Unterdruckanschluss innerhalb der Förderkammer (7, 8) in dem Membrankörper (15, 17) ausmündet.

3. Pulverförderpumpe nach Anspruch 2, **dadurch gekennzeichnet, dass** der Membrankörper (15, 17) zu der Förderkammerwandung beabstandet angeordnet ist.

4. Pulverförderpumpe nach Anspruch 3, **dadurch gekennzeichnet, dass** der Membrankörper (15, 17) in der Förderkammer (7, 8) im Wesentlichen mittig angeordnet ist.

5. Pulverförderpumpe nach einem der Ansprüche 2 bis 4, **dadurch gekennzeichnet, dass** der Membrankörper (15, 17) stromlinienförmig ist.

6. Pulverförderpumpe nach einem der Ansprüche 2 bis 5, **dadurch gekennzeichnet, dass** der Membrankörper (15, 17) auf einem Großteil seiner Oberfläche gasdurchlässig ist.

7. Pulverförderpumpe nach einem der Ansprüche 2 bis 6, **dadurch gekennzeichnet, dass** der Membrankörper (15, 17) auf der dem Einlass (23) zugewandten Seite gasundurchlässig und pulverundurchlässig und auf dem Auslass (24) zugewandten Seite gasdurchlässig, aber pulverundurchlässig ist.

8. Pulverförderpumpe nach einem der Ansprüche 2 bis 7, **dadurch gekennzeichnet, dass** der Überdruckanschluss innerhalb der Förderkammer (7, 8) in dem Membrankörper (15, 17) ausmündet.

9. Pulverförderpumpe nach Anspruch 8, **dadurch gekennzeichnet, dass** der Unterdruckanschluss und der Überdruckanschluss über eine gemeinsame Leitung (25) in den Membrankörper (15, 17) münden.

10. Pulverförderpumpe nach einem der Ansprüche 1 bis 7, **dadurch gekennzeichnet, dass** der Überdruckanschluss außerhalb des Membrankörpers (15, 17) in die Förderkammer (7, 8) mündet.

11. Pulverförderpumpe nach einem der vorhergehenden Ansprüche, **dadurch gekennzeichnet, dass** der Einlass (23) und der Auslass (24) auf gegenüberliegenden Seiten in die Förderkammer (7, 8) münden.

12. Pulverbeschichtungseinrichtung mit einer Pulverförderpumpe nach einem der vorhergehenden Ansprüche.

## Claims

1. Powder feed pump for feeding a powder (3), in particular in a powder coating installation, with
- a feed chamber (7, 8) with a feed chamber wall, wherein the feed chamber wall is substantially gas-tight,
- an inlet (23) which opens into the feed chamber (7, 8) for supplying the powder to the feed chamber (7, 8),
- an outlet (24) which opens out of the feed chamber (7, 8) for discharge of the powder (3) from the feed chamber (7, 8),
- a vacuum connection which opens into the feed chamber (7, 8) for generating a vacuum in the feed chamber (7, 8) for drawing in the powder (3) into the feed chamber (7, 8),
- an overpressure connection which opens into the feed chamber (7, 8) for blowing the powder (3) located in the feed chamber (7, 8) out through the outlet (24),
**characterised in that** the vacuum connection opens in the interior of the feed chamber (7, 8) at a distance from the feed chamber wall.

2. Powder feed pump as claimed in Claim 1, **characterised in that** in the feed chamber (7, 8) there is disposed a diaphragm member (15, 17) which is at least partially gas-permeable but impermeable to powder, wherein the vacuum connection opens within the feed chamber (7, 8) in the diaphragm member (15, 17).

3. Powder feed pump as claimed in Claim 2, **characterised in that** the diaphragm member (15, 17) is disposed at a distance from the feed chamber wall.

4. Powder feed pump as claimed in Claim 3, **characterised in that** the diaphragm member (15, 17) is disposed substantially centrally in the feed chamber (7, 8).

5. Powder feed pump as claimed in any one of Claims 2 to 4, **characterised in that** the diaphragm member (15, 17) is streamlined.

6. Powder feed pump as claimed in any one of claims 2 to 5, **characterised in that** the diaphragm member (15, 17) is gas-permeable over a greater part of its surface.

7. Powder feed pump as claimed in any one of Claims 2 to 6, **characterised in that** the diaphragm member (15, 17) is impermeable to gas and impermeable to powder on the side facing the inlet (23) and is permeable to gas but impermeable to powder on the side facing the outlet (24).

8. Powder feed pump as claimed in any one of claims 2 to 7, **characterised in that** the overpressure connection opens within the feed chamber (7, 8) in the diaphragm member (15, 17).

9. Powder feed pump as claimed in Claim 8, **characterised in that** the vacuum pressure connection and the overpressure connection open into the diaphragm member (15, 17) via a common line (25).

10. Powder feed pump as claimed in any one of Claims 1 to 7, **characterised in that** the overpressure connection opens into the feed chamber (7, 8) outside the diaphragm member (15, 17).

11. Powder feed pump as claimed in any one of the preceding claims, **characterised in that** the inlet (23) and the outlet (24) open into the feed chamber (7, 8) on opposite sides.

12. Powder coating device with a powder feed pump as claimed in any one of the preceding claims.

## Revendications

1. Pompe de circulation pour poudre pour le transport d'une poudre (3), en particulier dans une installation de revêtement de poudre, comportant
- une chambre de circulation (7, 8) avec une paroi, ladite paroi étant sensiblement étanche au gaz,
- une admission (23) débouchant dans la chambre de circulation (7, 8) en vue de faire entrer la poudre (3) dans la chambre de circulation (7,8),
- une sortie (24) sortant de la chambre de circulation (7, 8) en vue d'évacuer la poudre (3) hors de la chambre de circulation (7, 8),
- un raccord de dépression, débouchant dans la chambre de circulation (7, 8) pour générer une dépression dans la chambre de circulation (7, 8) en vue d'aspirer la poudre (3) dans la chambre de circulation (7, 8),
- un raccord de surpression, débouchant dans la chambre de circulation (7, 8) en vue de souffler à travers la sortie (24) la poudre (3) contenue dans la chambre de circulation (7, 8),
**caractérisée en ce que** le raccord de dépression débouche à l'intérieur de la chambre de circulation (7,8) à distance de la paroi de la chambre.

2. Pompe de circulation pour poudre selon la revendication 1, **caractérisée en ce que** dans la chambre de circulation (7, 8) est disposé un corps de membrane (15, 17) qui, au moins en partie, est perméable au gaz, mais imperméable à la poudre, le raccord de dépression débouchant à l'intérieur de la chambre de circulation (7, 8) dans le corps de membrane (15, 17).

3. Pompe de circulation pour poudre selon la revendication 2, **caractérisée en ce que** le corps de membrane (15, 17) est disposé à distance de la paroi de chambre.

4. Pompe de circulation pour poudre selon la revendication 3, **caractérisée en ce que** le corps de membrane (15, 17) est disposé sensiblement au milieu dans la chambre de circulation (7, 8).

5. Pompe de circulation pour poudre selon l'une quelconque des revendications 2 à 4, **caractérisée en ce que** le corps de membrane (15, 17) a une forme aérodynamique.

6. Pompe de circulation pour poudre selon l'une quelconque des revendications 2 à 5, **caractérisée en ce que** le corps de membrane (15, 17) est perméable au gaz sur une grande partie de sa surface.

7. Pompe de circulation pour poudre selon l'une quelconque des revendications 2 à 6, **caractérisée en ce que** le corps de membrane (15, 17) est imperméable au gaz et imperméable à la poudre sur le côté orienté vers l'admission (23), et est perméable au gaz, mais imperméable à la poudre sur le côté orienté vers la sortie (24).

8. Pompe de circulation pour poudre selon l'une quelconque des revendications 2 à 7, **caractérisée en ce que** le raccord de surpression débouche à l'intérieur de la chambre de circulation (7, 8) dans le corps de membrane (15, 17).

9. Pompe de circulation pour poudre selon la revendication 8, **caractérisée en ce que** le raccord de dépression et le raccord de surpression débouchent dans le corps de membrane (15, 17) par l'intermédiaire d'une conduite (25) commune.

10. Pompe de circulation pour poudre selon l'une quelconque des revendications 1 à 7, **caractérisée en ce que** le raccord de surpression débouche dans la chambre de circulation (7, 8) à l'extérieur du corps de membrane (15, 17).

11. Pompe de circulation pour poudre selon l'une quelconque des revendications précédentes, **caractérisée en ce que** l'admission (23) et la sortie (24) débouchent dans la chambre de circulation (7, 8) sur des côtés opposés.

12. Dispositif de revêtement de poudre comportant une pompe de circulation pour poudre selon l'une quelconque des revendications précédentes.
